# EUROPEAN PATENT SPECIFICATION

(11) **EP 3 656 975 B1**
(45) Date of publication and mention of the grant of the patent: **26.04.2023**
(21) Application number: 18208067.1
(22) Date of filing: 23.11.2018
(51) Int. Cl.: E21D 9/10, E21B 10/573, E21B 10/12, B22F 3/15, B22F 5/10, B22F 7/06, B23K 20/02, B23K 20/16, B23K 20/227, B23K 20/24, B23K 31/02, C22C 9/00, C22C 19/00, C22C 29/08, C25D 7/00

(54) **DISC CUTTER FOR TUNNEL BORING MACHINES AND A METHOD OF MANUFACTURE THEREOF**
PLATTENSCHNEIDER FÜR TUNNELBOHRMASCHINEN UND VERFAHREN ZUR HERSTELLUNG DAVON
COUPE-DISQUE POUR MACHINES D'ALÉSAGE DE TUNNELS ET SON PROCÉDÉ DE FABRICATION

(43) Date of publication of application: 27.05.2020
(73) Proprietor: Sandvik Mining and Construction Tools AB, 81181 Sandviken (SE)
(72) Inventor: EDERYD, Stefan, 132 47 Saltsjö-Boo (SE); SUNDSTRÖM, Johan, 126 80 Stockholm (SE); BERGLUND, Tomas, 791 93 Falun (SE); MEURLING, Fredrik, 806 28 Gävle (SE)
(74) Representative: Sandvik

(56) References cited:
- EP-A2- 0 090 658
- GB-A- 2 184 382
- US-A- 4 907 665
- US-A- 5 961 185
- US-A1- 2014 251 696
- US-B2- 10 018 042

## Description

### Technology field

The present disclosure relates to disc cutters for tunnel boring machines (TBM) and to a method of manufacturing thereof.

### Background

Cutting discs are used on tunnel boring machines for cutting rock and are used to cut different types of rock formation in the excavation of tunnels. Typically, cutting discs are made of hardened steel, but if the rock formation being cut is very hard then the cutting discs will wear out quickly. Attempts to overcome this problem have been made by mechanically attaching the cutting part(s) made from a material having a higher wear resistance, such as cemented carbide, to a steel disc body. The cutting parts could be in the form of buttons, wear pads or a continuous ring. The cemented carbide cutting parts are joined to the steel disc body mechanically via press fitting or are brazed into position. US4004645A1 and US4793427A1 show examples where the cutting part is mechanically attached to the disc body. US20140251696 discloses a cutting assembly for tunnel boring machines. GB2184382 discloses a method of attaching inserts. US4683781 discloses a method for attaching a metal carbide to steel.

However, there remains a problem that, especially for cutting hard or highly abrasive rock formations, as the disc cutters are rotating, high forces that are exerted onto the cutting parts of the discs. The high forces exert immense stress on the cutting part and on the joints between the cutting part and the disc body. These forces can cause the cutting parts(s) to twist, break or wear out unfavourably quickly. As cemented carbide cutting parts are more expensive than steel cutting parts, there needs to be an improvement in the performance in order to compensate for the additional cost. Therefore, if the cutting discs fails prematurely at the joint between the disc body and the cutting part, then it would be prohibitively expensive to use cemented carbide as the cutting part(s). There is the need for a disc cutter having a harder, more wear resistant cutting part, wherein the cutting part(s), the disc body and the joints between are strong enough to survive when subjected to high loads, whilst still meeting the size and compositional requirements of the disc cutter for the TBM application.

Disc cutters having discrete cutting parts, such as buttons, are currently limited to designs that have a significantly high contact area between the cutting part(s) and the disc body. If the cutting part is a plurality of buttons, there is a trade-off between the size of the cutting part and joint design, which with currently known methods of mechanically joining the cutter part(s) to the disc body can create fractures or detachment at the joints and consequently premature failure of the cutting disc. Therefore, the problem to be solved is how to form a disc cutter that has a higher mechanical strength in the joints between the disc body and the cutting part(s) to increase the working lifetime of the disc cutter.

Another problem with the current designs is that as a relatively large volume of steel is required in the disc body to hold the cutting part(s) in place, consequently there is limited space available for the fragments of crushed rock to collect after being cut which results in higher rotating forces and stresses being exerted onto the head of the drill bit which will reduce its lifetime. Therefore, a further problem to be solved is how to form a disc cutter having a strong joint between the cutter part(s) and the disc body without having to increase the size of the disc body.

### Summary

The present disclosure therefore relates to a disc cutter for a cutting unit used in a tunnel boring machine comprising:
an annular disc body made of a metal alloy or metal matrix composite having a first side, a second side arranged substantially opposite to the first side and a radially peripheral part; and
at least one metal alloy, metal matrix composite or cemented carbide cutting part mounted in and substantially encircling the radially peripheral part of the disc body which protrudes outwardly therefrom to engage with the rock during the mining operation;

wherein the at least one cutting part is made from a material having a higher wear resistance than the material used for the disc body;
characterized in that there is a metallic interlayer between at the least one disc body and the at least one cutting part, the elements of which form the diffusion bonds. The invention relates to a disc cutter as set out in claim 1. Further embodiments of the invention are defined by the dependent claims 2-5.

The advantage of the present invention is that a cutting disc is formed having a high wear resistant edge and a high strength mechanical joint between the at least one disc body and the at least one cutting part. The improvement in the mechanical strength of the joint will improve the lifetime of the cutting disc in the tunnel boring machine. As the strength of the joint between the cutting disc and the cutting part has been improved, the contact area between the two parts does not need to be as high, therefore a further advantage is that is possible to increase the ratio of the volume of the cutting part compared to the volume of the disc body, thereby improving the cutting efficiency of the disc cutter. By increasing the strength of the joint between the cutting part and a disc body it is possible to apply higher loads and it is possible to increase the penetration depth and lifetime of the disc cutter. This means that fewer stoppages are required for repair or replacement of the disc cutters and so continuous cutting is possible for longer, which will ultimately result in an increase in profitability.

According to the invention the metallic interlayer essentially comprises nickel, nickel alloy, copper or copper alloy. The advantage of this is that a stronger diffusion bond is formed between disc body and the at least one cutting part.

In preferred embodiments, the metallic interlayer comprises an alloy essentially consisting of copper and nickel. The advantage of this is that a stronger diffusion bond is formed between the disc body and the at least one cutting part. The metallic interlayer will provide for that the diffusion of carbon between the disc body and the at least one cutting part will be low due to the low solubility for carbon in the metallic interlayer at the processing temperatures in question, hence the metallic interlayer will be acting as a migration barrier or a choke for the migration of carbon atoms between the metal alloy or of metal matrix alloy in the disc body and the metal alloy, MMC or cemented carbide in the cutting part without impairing the ductility of the diffusion bond between the two parts.

In preferred embodiments, the metallic interlayer has a thickness of from about 5 to about 500 µm. It is advantageous for the metallic interlayer to have a thickness in this range to for both effectiveness and ease of manufacturing.

According to the invention, the cutting part comprises a cemented carbide. This is advantageous as cemented carbide is highly wear resistant.

According to one aspect of the present disclosure, which is not part of the invention, the at least one cutting part is in the form of a plurality of buttons or wear pads. These types of cutting parts are advantageous where increased point loading and lower rolling resistance are preferred during operation.

According to the invention, the cutting part is in the form of a continuous ring. This advantageously provides a continuous cutting edge.

According to one aspect of the present disclosure, the disc body comprises at least two layers. This provides the benefit of being able to fix a continuous ring securely in place.

According to one aspect of the present disclosure, wherein the disc body comprises a first layer and a second layer, wherein the first layer comprises a metal or metal matrix composite with a higher wear resistance than the second layer. This provides the advantage of being able to use a more wear resistant grade of material on the side of the disc cutter that is exposed to the rock and a cheaper grade of materials that is not. Post HIP the at least two layers will be joined together to form a unitary body.

The present disclosure further relates to a method for manufacturing a disc cutter for a cutting unit used in tunnel boring machines comprising an annular disc body made of a metal alloy or metal matrix composite having a first side, a second side arranged substantially opposite to the first side and a radially peripheral part; and at least one metal alloy, metal matrix composite or cemented carbide cutting part mounted in and substantially encircling the radially peripheral part of the disc body which protrudes outwardly therefrom to engage with the rock during operation; comprising the steps of:
a) providing at least one disc body made of a metal alloy or at least one disc body made of a metal matrix composite and at least one metal alloy cutting part or at least one metal matrix composite cutting part or at least one cemented carbide cutting part;
b) positioning a metallic interlayer between each of the surface(s) of each of the disc body and each of the surfaces of the at least one cutting part;
c) assembling the at least one disc body and at least one cutting part together;
d) enclosing the at least one disc body and the at least one cutting part in a capsule;
e) optionally evacuating air from the capsule;
f) sealing the capsule;
g) subjecting the capsule to a predetermined temperature of above about 1000°C and a predetermined pressure of from about 300 bar to about 1500 bar during a predetermined time.
The invention further relates to a method as set out in claim 6. Further embodiments of the invention are set out in the dependent claims 7-10.

The advantage of the present method is that there is an improvement in the mechanical strength of the joint between the disc cutter and the at least one cutting part which will increase the lifetime of the cutting disc in the tunnel boring machine.

In preferred embodiments, the metallic interlayer essentially comprises nickel, nickel alloy, copper or copper alloy. The advantage of this is that a stronger diffusion bond is formed between disc body and the at least one cutting part.

In preferred embodiments, the metallic interlayer is formed by an alloy essentially consisting of copper and nickel. The advantage of this is that a stronger diffusion bond is formed between disc body and the at least one cutting part.

According to one aspect of the present disclosure, the metallic interlayer is formed from a foil or a powder.

According to one aspect of the present disclosure, the metallic interlayer is formed by electrolytic plating.

In preferred embodiment, grooves are added to the surface(s) of the at least one cutting part or to the surface(s) of both the at least one annular body and to the surface(s) of the at least one cutting part. This provides the advantage of increasing the surface contact area between the cutting disc and the at least one cutting part, which will increase the strength of the joint.

### Figures

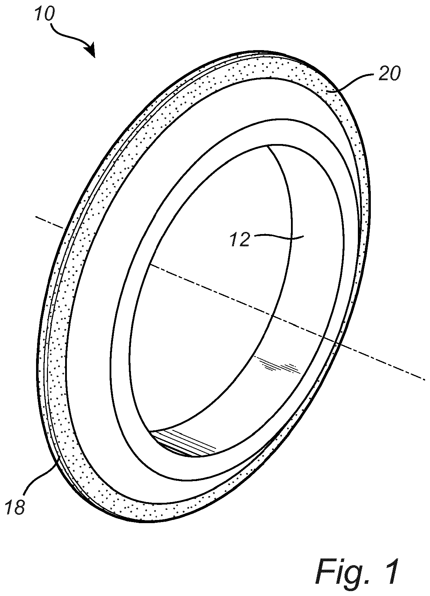

Figure 1: Perspective view of a disc cutter for use in a TBM.

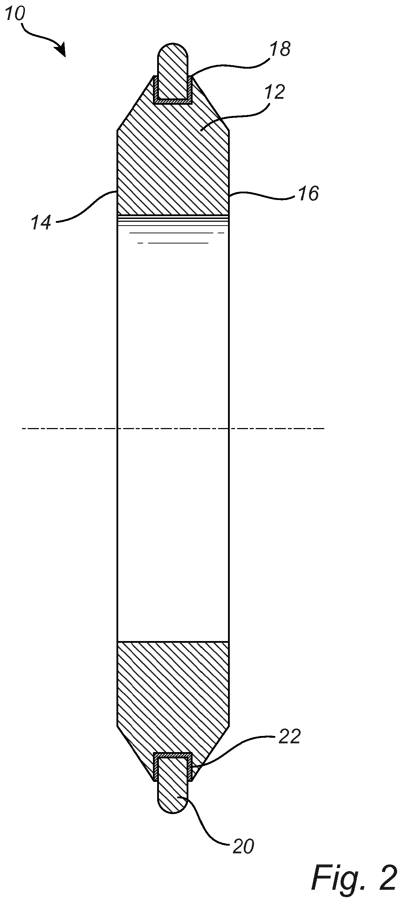

Figure 2: Cross section of a disc cutter for use in a TBM.
Figure 3: Perspective view of the disc cutter having recesses drilled into the peripheral of the disc body wherein the at least one cutting part is a plurality of buttons.
Figure 4: Perspective view of the disc cutter having two layers wherein the at least one cutting part is a plurality of buttons.
Figure 5: Perspective view of a disc cutter with wear pads, arranged such that the neighbouring side of adjacent wear pads are in contact.
Figure 6: Perspective view of a disc cutter with wear pads, arranged such that there are gaps between adjacent wear pads.
Figure 7: Perspective view of the disc cutter with a groove for inserting the wear pads.
Figure 8: Perspective view of the disc cutter having two layers to sandwich the continuous ring in-between.
Figure 9: Cross section of the disc cutter having two layers to sandwich the continuous ring in-between.
Figure 10: Perspective view of the disc cutter with a symmetrical continuous ring.
Figure 11: Perspective view of the disc cutter with an asymmetrical continuous ring.
Figure 12: Flow chart of method.
Figure 13: Cross section of the cutting part having grooves on the surface.

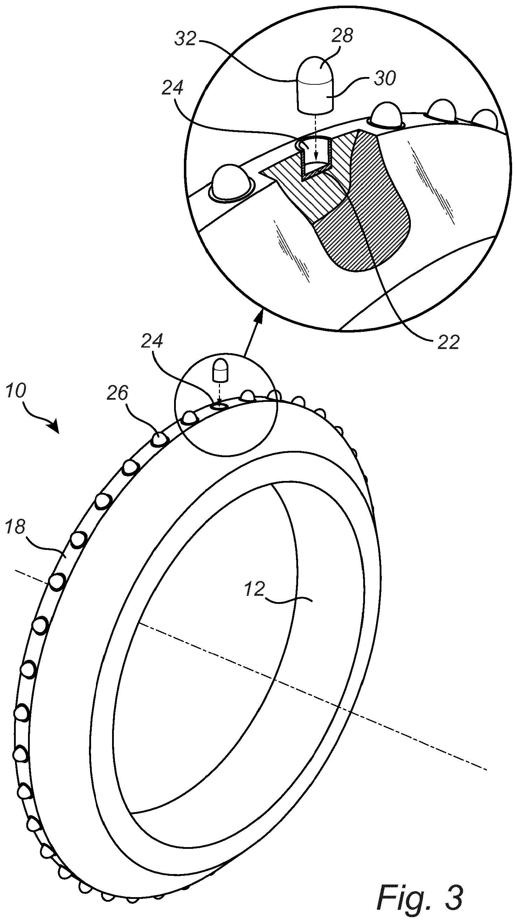

Fig. 3-7 show embodiments that are not part of the invention.

### Description

Figures and 1 and 2 show one aspect of the present disclosure relating to a disc cutter 10) for a cutting unit used in a tunnel boring machine comprising:
an annular disc body 12 made of a metal alloy or metal matrix composite having a first side 14, a second side 16 arranged substantially opposite to the first side 14 and a radially peripheral part 18; and
at least one metal alloy, metal matrix composite or cemented carbide cutting part 20 mounted in and substantially encircling the radially peripheral part of the disc body 10 which protrudes outwardly therefrom to engage with the rock during operation;

wherein the at least one cutting part 20 is made from a material having a higher wear resistance than the material used for the disc body 12;
characterized in that there is a metallic interlayer 22 between at the least one disc body 12 and the at least one cutting part 20, the elements of which form the diffusion bonds.

The disc cutters 10 are used to excavate material, such as rock, from a tunnel surface. The disc cutters 10 rotate and the cutting part 20 is pushed against the tunnel face to fractionate, crush or loosen materials on the tunnel face, which may be transported away by the TBM.

In one embodiment, the disc body 12 is made from a metal alloy, preferably a steel alloy. The steel grade may be selected depending on functional requirement of the product to be produced. For example, but not limited to, stainless steel, carbon steel, ferritic steel and martensitic steel. The metal alloy may be a forged and/or a cast body. There is always a trade-off between the hardness and the toughness of the metal alloy selected for disc body and the metal alloy must be selected to have the appropriate balance of these properties for the specific application.

In one embodiment, the disc body 12 is made from a metal matrix composite (MMC). A metal matrix composite is a composite material comprising at least two constituent parts, one part being a metal and the other part being a different metal or another material, such as a ceramic, carbide, or other types of inorganic compounds, which will form the reinforcing part of the MMC. According to one embodiment of the present method as defined hereinabove or hereinafter, the at least one metal matrix composite body (MMC) consists of hard phase particles selected from titanium carbide, tantalum carbide, niobium carbide and/or tungsten carbide and of a metallic binder phase which is selected from cobalt, nickel and/or iron. According to yet another embodiment, the at least one body of MMC consists of hard phase particles of tungsten carbide and a metallic binder of cobalt or nickel or iron or a mixture thereof.

In one embodiment, the at least one cutting part comprises a cemented carbide. Cemented carbides comprise carbide particles in a metallic binder. According to one embodiment, the cemented carbide cutting part consists of hard phase selected from titanium carbide, titanium nitride, titanium carbonitride, tantalum carbide, niobium carbide, tungsten carbide or a mixture therefore and a metallic binder phase selected from cobalt, nickel, iron or a mixture thereof. Typically, more than 50 wt% of the carbide particles in the cemented carbide are tungsten carbide (WC), such as 75 to 99 wt%, preferably 94 to 82 wt%. According to one embodiment, the cemented carbide cutting part 20 consists of a hard phase comprising more than 75 wt% tungsten carbide and a binder metallic phase of cobalt. The cemented carbide cutting part 20 may be either powder, pre-sintered powder or a sintered body. The cemented carbide cutting part 20 may be manufactured by molding a powder mixture of hard phase and metallic binder and the pressing the powder mixture into a green body. The green body may then be sintered or pre-sintered into a cutting part 20 which is to be used in the present method.

The terms "diffusion bond" or "diffusion bonding" as used herein refers to as a bond obtained through a diffusion bonding process which is a solid-state process capable of bonding similar and dissimilar materials. It operates on the principle of solid-state diffusion, wherein the atoms of two solid, material surfaces intermingle over time under elevated temperature and elevated pressure. The term "substantially encircling" means that the cutting part(s) are in the form of a ring around the peripheral edge 18 of the disc body 12.

In one embodiment, the metallic interlayer 22 essentially comprises nickel, nickel alloy, copper or copper alloy. A nickel alloy is defined as having at least 50 wt% nickel and a copper alloy is defined as having at least 50 wt% copper.

In one embodiment, the metallic interlayer 22 comprises an alloy essentially consisting of copper and nickel. There will be a difference in carbon activity between the metal alloy or MMC in the disc body 12 and the metal alloy, MMC or cemented carbide in the cutting part 20, as the body comprising cemented carbide will have higher carbon activity which will generate a driving force for migration of carbon from the cemented carbide to the metal. However, experiments have surprisingly shown that by introducing a metallic interlayer 22 comprising an alloy essentially consisting of copper and nickel between or on at least one surface of the disc body and / or at least one cutting part to be HIP:ed, the above-mentioned problems are alleviated. The experiments have shown that the metallic interlayer 22 will provide for that the diffusion of carbon between the disc body 12 and the at least one cutting part 20 will be low due to the low solubility for carbon in the metallic interlayer 22 at the processing temperatures in question, hence the metallic interlayer 22 will be acting as a migration barrier or a choke for the migration of carbon atoms between the metal alloy or of metal matrix alloy in the disc body 12 and the metal alloy, MMC or cemented carbide in the cutting part 20 without impairing the ductility of the diffusion bond between the two parts. This means that the risk that the at least one cutting part 20 will crack during operation and cause failure of the component is reduced.

In one embodiment, the copper content in the interlayer 22 is of from 25 to 98 wt%, preferably from 30 to 90 wt%, most preferably from 50 to 90 wt%. Optionally, rare earth elements could be added.

In one embodiment, the metallic interlayer 22 has a thickness of from about 5 to about 500 µm, preferably from about 50 to about 500 µm.

In one embodiment, not part of the invention, the at least one cutting part 20 is the form of a plurality of buttons 26 or wear pads 40.

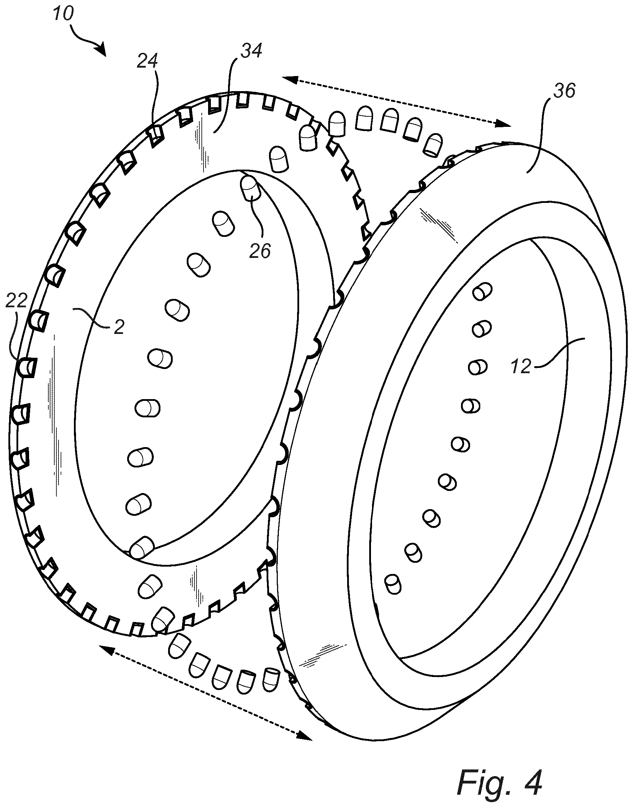

Figure 3 shows one embodiment, wherein the at least one cutting part 20 is in the form of buttons 26. Preferably, at least some of the buttons 26 have a domed cutting surface 28, and preferably substantially a hemi-spherical cutting surface and a cylindrical mounting part 30. In one embodiment, the disc body 12 includes a plurality of button recesses 24 which are bored into the radially peripheral surface 18 of the disc body 12. The metallic interlayer 22 is first placed in each of the button recesses 24 and / or on each of the mounting parts 30 of the buttons 26 and then a button 26 is located in each of the button recesses 24 on top of the metallic interlayer 22. Typically, the buttons 26 are made from cemented carbide. The number of button recesses 24 and buttons 26 used is selected according to the application. The buttons 26 are arranged to abrade rock as the cutting head of the tunnel boring machine (not shown) rotates. Typically, the disc cutter 10 includes 30 to 50 button recesses 24 and buttons 26. In preferred embodiments each domed cutting 28 surface sits immediately proud of the peripheral surface 18. Typically, a greater number of buttons 26 are used for disc cutters having a larger diameter. That is, each cylindrical mounting part 30 of the button 26 does not protrude beyond the peripheral surface 18, but rather is located within its respective button recess 24. In preferred embodiments an edge 32 that defines where the domed cutting surface 28 meets the cylindrical mounting part 30 is substantially aligned with the peripheral surface 18. In preferred embodiments each cylindrical mounting part 30 substantially fills its respective recess 24. Figure 4 shows an alternative, wherein the buttons 26 could be fixed in place by inserting the buttons 26 in-between a first layer 34 of the disc body 12 and a second layer 36 of the disc body 12. The first layer 34 and second layer 36 are formed with recesses 24 to hold the buttons 26 in place. The metallic interlayer 22 is first placed in each of the button recesses 24 and / or on each of the mounting parts 30 of the buttons 26 and then the first layer 34 and second layer 36 are assembled together with the buttons 26 in-between before being HIP:ed.

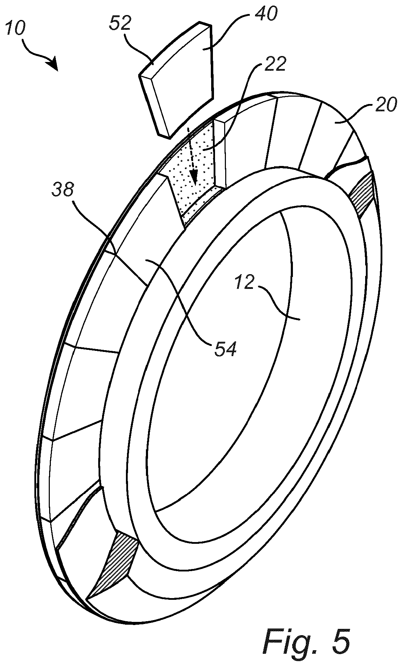

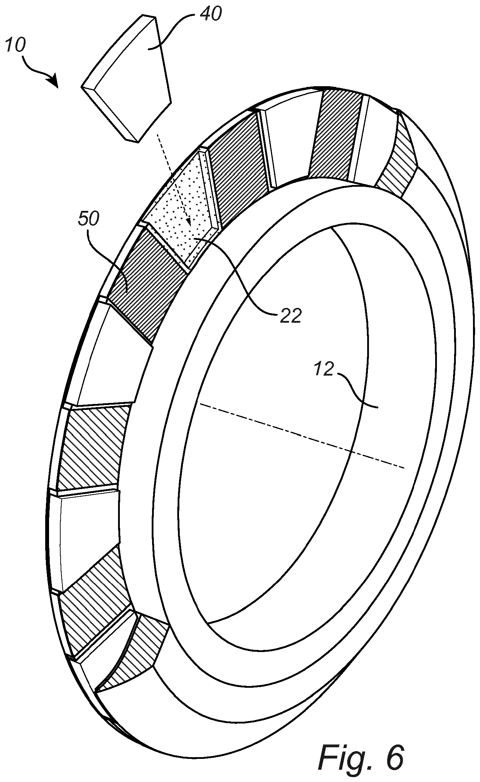

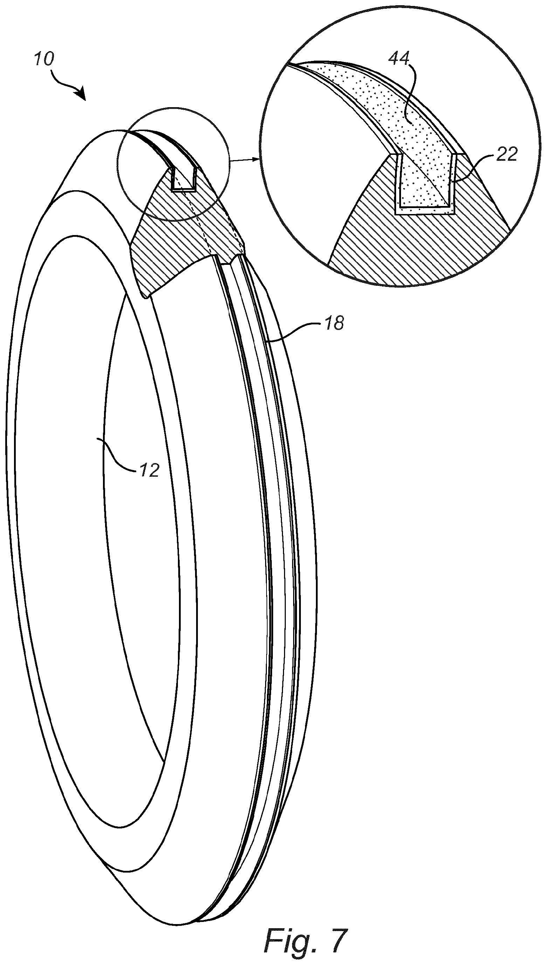

Alternatively, the at least one cutting part 20 is in the form of wear pads 40. Preferably, the wear pads 40 are made from cemented carbide. The number of wear pads 40 used is selected according to the application. The wear pads 40 are arranged to abrade rock as the cutting head of the tunnel boring machine (not shown) rotates. Typically, the shape of the wear pads 40 are as shown in figure 5, i.e. they could have been envisaged as wedges which have been radially cut from a ring. The wear pads have a cutting edge 52 which will be in contact with the rock and a mounting part 54 which will join to the disc body 12 and may be either spherically or conically shaped at its largest diameter. The number of wear pads 40 used would be optimised for the given size of the disc cutter and for the specific application. Figure 5 shows one embodiment, wherein the wear pads 40 are arranged such that the neighbouring side 38 of adjacent wear pads 40 are in contact with each other. Consequently, during the HIP process bonds are formed between the adjacent wear pads 40, thus forming a continuous cutting edge. Figure 6 shows an alternative, wherein gaps 50 could be left between each of the adjacent wear pads 40, thus forming a segmented cutting edge to create point loading effects on the rock as the cutting disc rotates. Figure 7 shows the disc body is formed with a circumferal grove 44 formed the peripheral edge 18 to construct the disc cutter. First, the intermetallic layer 22 placed the circumferal grove 44 in the disc body 12 and / or on the mounting part 54 of each of the wear pads 40. The wear pads 40 may be inserted into the circumferal grove 44 formed in the disc body 12. Alternatively, if gaps are to left between each of the adjacent wear pads 40, recesses could be formed in the peripheral edge 18 of the disc body 12 for the wear pads to be inserted into. Alternatively, the wear pads 40 could be fixed in place by inserting the wear pads 40 in-between a first layer 34 of the disc body 12 and a second layer 36 of the disc body 12, similar to that shown in figure 4, with the buttons 26 being replaced by wear pads 40. The first layer 34 and second layer 36 of the disc body 12 are formed with recesses 46 to hold the wear pads 40 in place. If gaps are to be left between each of the adjacent wear pads 40 then at least one of the first layer 34 and /or second layer 36 of the disc body will be formed such that there is a volume of metal alloy or MMC to fill in the gaps and thus, post the HIP process, an integrated unit is formed. Similarly, the metallic interlayer 22 is positioned between the disc body 12 and the wear pads 40 before the HIP process.

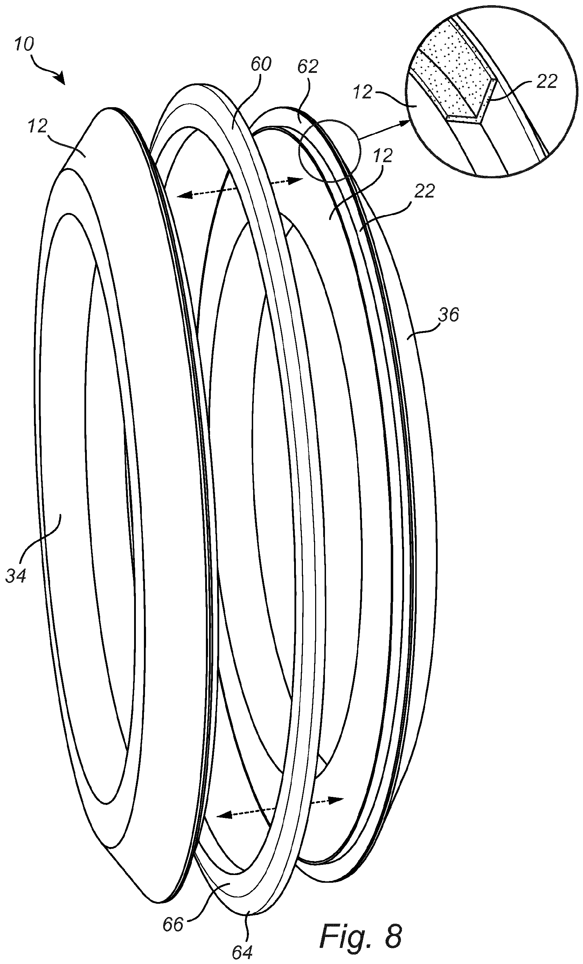

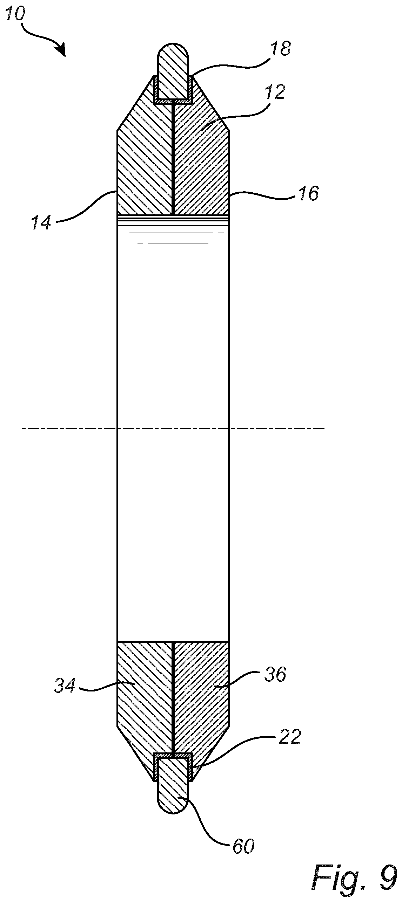

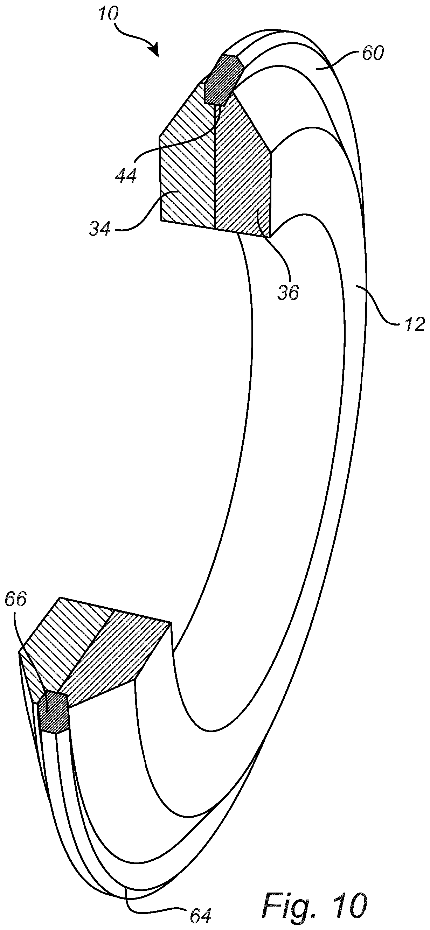

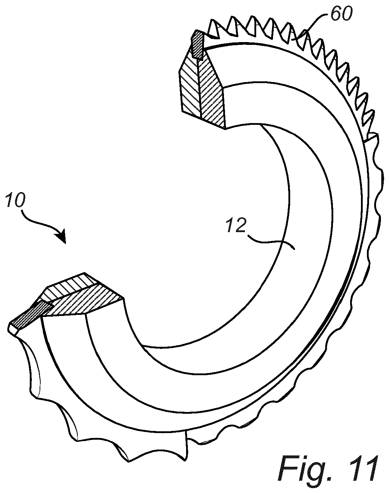

Figure 8 shows one embodiment, wherein the at least one cutting part 20 is in the form of a continuous ring 60. The continuous ring is preferably made out of cemented carbide. The continuous ring 60 comprises a sharp peripheral cutting edge 64 and a support part 66 and may be either spherically or conically shaped at its largest diameter. Figure 8 shows the support part 66 is enclosed within the circumferential groove 62 of the disc body 12. Figures 8 and 9 shows the continuous ring 60 is fixed in place by inserting it in-between a first layer 34 of the disc body 12 and a second layer 36 of the disc body 12 with a metallic interlayer 22 positioned between the continuous ring 60 and the disc body 12. A cross sectional view of the metallic interlayer 22 is shown in the enlargement in figure 8. At least one of the first layer 34 and/or second layer 36 are formed with a continuous recess 62 to hold the continuous ring 60 in place. After the HIP process the first layer 34, the second layer 36 and the continuous ring 60 join to form an integrated disc cutter 10 having a smooth, uninterrupted cutting edge. The continuous ring 60 could also be mechanically locked into position before the HIP treatment by any other suitable method. The cross section of the continuous ring 60 could be either symmetrical, as shown in figure 10 or non-symmetrical, as shown in figure 11. The resulting profile of the cutting edge, may either be a smooth as shown in figure 10 or oscillating so as to form a 'cogwheel' shape as shown in figure 11. Figure 11 discloses different profiles of the continuous ring 60.

In one embodiment, the disc body 12 comprises at least two layers, each layer having a different type of metal alloy or metal matrix alloy. As described hereinabove, the disc cutter may comprise a first layer 34, which will form the second side 16 of the disc cutter 10 and a second layer 36, which will form the first side 14 of the disc cutter 10. The first layer 34 and the second layer 36 could be made from different materials, for example a higher wear resistant grade of metal alloy or MMC could be used on the side of the disc cutter 10 that is exposed to higher wear rates and the side less exposed to the wear could be made from a cheaper grade of metal alloy or MMC.

Another aspect of the present disclosure is a method for manufacturing a disc cutter 10 for a cutting unit used in tunnel boring machines comprising an annular disc body 12 made of a metal alloy or metal matrix composite having a first side 14, an second side 16 arranged substantially opposite to the first side 14 and a radially peripheral part 18; and at least one metal alloy, metal matrix composite or cemented carbide cutting part 20 mounted in and substantially encircling the radially peripheral part 18 of the disc body 12 which protrudes outwardly therefrom to engage with the rock during the cutting operation; comprising the steps of:
a) providing at least one annular disc body 12 made of a metal alloy or at least one annular body 12 made of a metal matrix composite and at least one metal alloy cutting part 20 or at least one metal matrix composite cutting part 20 or at least one cemented carbide cutting part 20;
b) positioning a metallic interlayer 22 between each of the surface(s) of each of the disc body 12 and each of surface(s) of the cutting parts 20;
c) assembling the at least one disc body 12 and at least one cutting part 20 together;
d) enclosing the at least one annular disc body 12 and the at least one cutting part 20 in a capsule;
e) optionally evacuating air from the capsule;
f) sealing the capsule;
g) subjecting the capsule to a predetermined temperature of above about 1000°C and a predetermined pressure of from about 300 bar to about 1500 bar during a predetermined time.

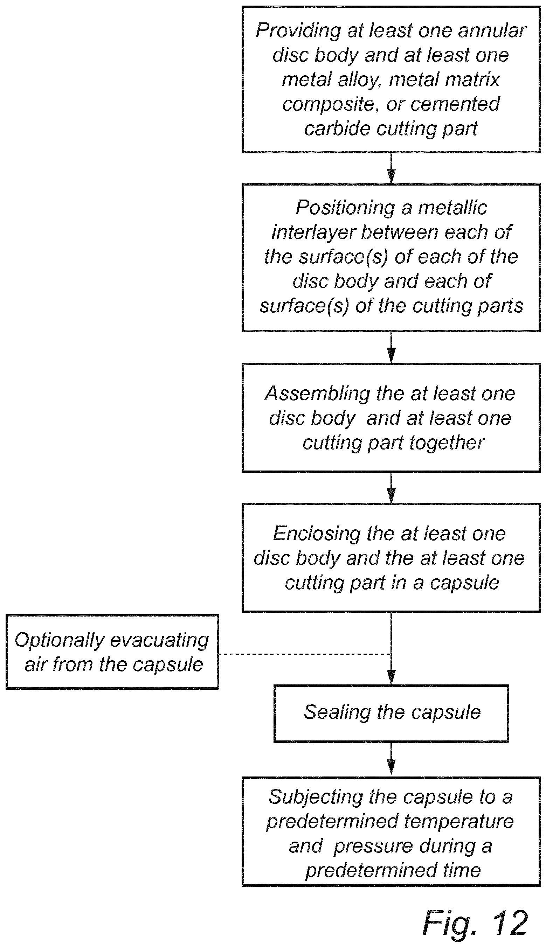

Steps d) to g) above describe a Hot Isostatic Pressing (HIP) process. HIP is a method which is very suitable for Near Net Shape manufacturing of individual components. In HIP, a capsule which defines the final shape of the component is filled with a metallic powder and subjected to high temperature and pressure whereby the particles of the metallic powder bond metallurgically, voids are closed and the material is consolidated. The main advantage of the method is that it produces components of final, or close to final, shape having strengths comparable to or better than forged material. The specific advantage of using a HIP method to join the at least one cutting part 20 to the disc body 12 for use as a disc cutter 10 in a tunnel boring machine is that higher wear resistance and integrity of the joints is achieved. Figure 12 shows a flow chart of the method.

In the present HIP process, the diffusion bonding of the metal alloy or metal matrix composite disc body 12 and the at least one metal alloy, metal matrix composite or cemented carbide cutting part 20 occurs when the capsule is exposed to the high temperature and high pressure for certain duration of time inside a pressure vessel. The capsule may be a metal capsule which is sealed by means of welding. Alternatively, the capsule may be formed by a glass body. During this HIP treatment, the disc body 12, the cutting part 20 and metallic interlayer 22 are consolidated and a diffusion bond is formed. As the holding time has come to an end, the temperature inside the vessel and consequently also of the consolidate body is returned to room temperature. Diffusion bonds are formed by the elements of the metallic interlayer 22 and the elements of the disc body 12 and the at least one cutting part 20.

The pre-determined temperature applied during the predetermined time may, of course, vary slightly during said period, either because of intentional control thereof or due to unintentional variation. The temperature should be high enough to guarantee a sufficient degree of diffusion bonding within a reasonable time period between the disc body and the at least one cutting part. According to the present method, the predetermined temperature is above about 1000 °C, such as about 1100 to about 1200°C.

The predetermined pressure applied during said predetermined time may vary either as a result of intentional control thereof or as a result of unintentional variations thereof related to the process. The predetermined pressure will depend on the properties of the disc body and the at least one cutting part to be diffusion bonded.

The time during which the elevated temperature and the elevated pressure are applied is, of course, dependent on the rate of diffusion bonding achieved with the selected temperature and pressure for a specific the disc body 12 geometry, and, of course, on the properties of the at least one cutting part 20 to be diffusion bonded. Predetermined time ranges are for example from 30 minutes to 10 hours.

In one embodiment of the method, the at least one cutting part 20 comprises cemented carbide. In another embodiment the cemented carbide consists of a hard phase comprising titanium carbide, titanium nitride, titanium carbonitride, tantalum carbide, niobium carbide, tungsten carbide or a mixture therefore and a metallic binder phase selected from cobalt, nickel, iron or a mixture thereof.

In one embodiment of the method, the disc body 12 is made of steel.

According to the invention, the metallic interlayer 22 essentially comprises nickel, nickel alloy, copper or copper alloy.

In one embodiment of the method, the metallic interlayer 22 is formed by an alloy essentially consisting of copper and nickel. The presence of the metallic interlayer 22 will avoid the formation of brittle phases such as M₆C-phase (also known as eta-phase) and W₂C-phase in the interface between the cemented carbide and the surrounding steel or cast iron. It is important to avoid the formation of such brittle phases as they are prone to cracking easily under load, which may cause detachment of the cemented carbide or the cracks may propagate into the cemented carbide cutting part 20 and cause these to fail with decreased wear resistance of the component as a result. Surprisingly, it has been found that the introduction of the metallic interlayer 22, formed by an alloy essentially consisting of copper and nickel, between or on at least one of the surfaces of the disc body 12 and / or the at least one cutting part 20 that the above problem is alleviated. The metallic interlayer 22 acts as migration barrier or a choke for the migration of carbon atoms between the metal alloy or metal matrix alloy and cemented carbide without impairing the ductility of the diffusion bond in-between. This means that the risk that the at least one cemented carbide cutting part 20 will crack during operation and cause failure of the component is reduced.

According to the present method, the metallic interlayer 20 may be formed from a foil or a powder. However, the application of the metallic interlayer 20 may also be performed by other methods such as thermal spray processes (HVOF, plasma spraying and cold spraying). The metallic interlayer 20 may be applied to: either the surface(s) of the disc body 12 or the surface(s) of the at least one cutting part 20; or on both the surface(s) of the disc body 12 and the at surface(s) of the at least one cutting part 20; or in between the surfaces of the disc body 12 and the at least one cutting part 20. For the parts to be HIP:ed, it is important that there are no areas where the cemented carbide cutting part(s) 20 is in direct contact with the metal alloy or metal matrix composite of the disc body 12. The metallic interlayer 22 may alternatively be applied by electrolytic plating. According to the present disclosure, the copper content of the metallic interlayer 22 is of from 25 to 98 wt%, preferably from 30 to 90 weight% (wt%), more preferably from 50 to 90 wt%. The chosen composition of the metallic interlayer 22 will depend on several parameters such as the HIP cycle plateau temperature and holding time as well as the carbon activity at that temperature of the components to be bonded. According to one embodiment, the metallic interlayer 22 has thickness of about 5 to about 500 µm, such as from 100 to 500 µm. If the metallic interlayer is in the form of a foil, the thickness will typically be between about 50 to about 500 µm. If the metallic interlayer is in the form of a thermal spray process the thickness will typically be between 5 and 25 µm. The term "essentially consists" as used herein refers to that the metallic interlayer 22 apart from copper and nickel also may comprise other elements, though only at impurity levels, i.e. less than 3 wt%.

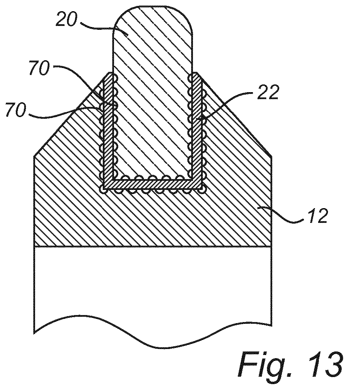

Figure 13 shows one embodiment, wherein a plurality of grooves 70 are formed in the surfaces of the at least one cutting part 20 or in the surfaces of both the at least one disc body 12 and the at least one cutting part 20. The inclusion of the grooves 70 increases the surface area between the at least one cutting part 20 and the disc body 12 and thus improves the strength of the joint in-between. The grooves 70 could also be in the form of waves or ridges.

Once the disc cutter 10 has been formed, drill holes are machined into the disc body 12 in order to be able to attach the disc cutter 10 to the tunnel boring machine (not shown).

It should be understood that any of the embodiments disclosed hereinbefore or hereinafter could be combined together. For example, but not limited to, the application of the metallic interlayer 22, comprising either: essentially nickel, nickel alloy, copper or copper alloy; or comprising an alloy essentially consisting of copper and nickel could be combined with the at least one cutting part 20 comprising cemented carbide. The application of the metallic interlayer 22 as described hereinbefore or hereinafter could be combined with the at least one cutting part 20 being in the form of a plurality of buttons 26 or a plurality of wear pads 40 or being in the form of a continuous cutting ring 60. The application of the metallic interlayer 22 as described hereinbefore or hereinafter could be combined with the disc body 12 having at least two layers. The at least one cutting part 20 being in the form of a plurality of buttons 26 or a plurality of wear pads 40 or being in the form of a continuous cutting ring 60 could be combined with the disc body 12 having at least two layers and / or with the at least cutting part 20 comprising cemented carbide. The addition of the grooves 70 which could be added to the surface(s) of the at least one cutting part 20 or to the surface(s) of both the at least one disc body 12 and to the surface(s) of the at least one cutting part 20 could be combined with the application of the metallic interlayer 22 as described hereinbefore or hereinafter. The addition of the grooves 70 which could be added to the surface(s) of the at least one cutting part 20 or to the surface(s) of both the at least one disc body 12 and to the surface(s) of the at least one cutting part 20 could be combined with the at least one cutting part 20 being in the form of a plurality of buttons 26 or a plurality of wear pads 40 or being in the form of a continuous cutting ring 60.

## Claims

1. A disc cutter (10) for a cutting unit used in a tunnel boring machine comprising:
an annular disc body (12) made of a metal alloy or metal matrix composite having a first side (14), a second side (16) arranged substantially opposite to the first side (14) and a radially peripheral part (18); and
a cemented carbide cutting part (20) mounted in and substantially encircling the radially peripheral part (18) of the annular disc body (12) which protrudes outwardly therefrom to engage with the rock during operation;
wherein the cutting part (20) is made from a material having a higher wear resistance than the material used for the at least one disc body (12);
wherein there is a metallic interlayer (22) essentially comprising nickel, nickel alloy, copper or copper alloy between the annular disc body (12) and the cutting part (20);
**characterized in that** the cutting part (20) is in the form of a continuous ring (60) and wherein the elements of the metallic interlayer (22) form diffusion bonds between the annular disc body (12) and the cutting part (20)

2. Disc cutter (10) according to claim 1, wherein the metallic interlayer (22) comprises an alloy essentially consisting of copper and nickel.

3. Disc cutter (10) according to any of claims 1-2, wherein the metallic interlayer (22) has a thickness of from about 5 to about 500 µm.

4. Disc cutter (10) according to any of claims 1-3, wherein the annular disc body (12) comprises at least two layers.

5. Disc cutter (10) according to claim 4, wherein the annular disc body (12) comprises a first layer (34) and a second layer (36), wherein the first layer (34) comprises a metal or metal matrix composite with a higher wear resistance than the second layer (36).

6. A method for manufacturing a disc cutter (10) for a cutting unit used in tunnel boring machines comprising an annular disc body (12) made of a metal alloy or metal matrix composite having a first side (14), a second side (16) arranged substantially opposite to the first side (14) and a radially peripheral part (18); and a cemented carbide cutting part (20) in the form of a continuous ring (60) mounted in and substantially encircling the radially peripheral part (18) of the annular disc body (12) which protrudes outwardly therefrom to engage with the rock during the cutting operation; comprising the steps of:
a) providing an annular disc body (12) made of a metal alloy or an annular disc body (12) made of a metal matrix composite and a cemented carbide cutting part (20) in the form of a continuous ring (60);
b) positioning a metallic interlayer (22) essentially comprising nickel, nickel alloy, copper or copper alloy between the annular disc body (12) and the cemented carbide cutting part (20);
c) assembling the annular disc body (12) and the cemented carbide cutting part (20) together;
d) enclosing the annular disc body (12) and the cemented carbide cutting part (20) in a capsule;
e) optionally evacuating air from the capsule;
f) sealing the capsule;
g) subjecting the capsule to a predetermined temperature of above about 1000°C and a predetermined pressure of from about 300 bar to about 1500 bar during a predetermined time.

7. Method according to claim 6, wherein the metallic interlayer (22) is formed by an alloy essentially consisting of copper and nickel.

8. The method according to any of claims 6-7, wherein the metallic interlayer (22) is formed from a foil or a powder.

9. The method according to any of claims 6-7, wherein the metallic interlayer (22) is formed by electrolytic plating.

10. The method according to any of claims 6-9, wherein grooves (70) are added to the surface(s) of the cemented carbide cutting part (20) or to the surface(s) of both the at least one disc body (12) and to the surface(s) of the cutting part (20).

## Patentansprüche

1. Scheibenschneider (10) für eine Schneideinheit, die in einer Tunnelbohrmaschine verwendet wird, umfassend:
einen ringförmigen Scheibenkörper (12), der aus einer Metalllegierung oder einem Metallmatrix-Verbundmaterial hergestellt ist, der eine erste Seite (14), eine zweite Seite (16), die im Wesentlichen der ersten Seite (14) entgegengesetzt eingerichtet ist, und ein radial umfängliches Teil (18) aufweist; und
ein Sinterkarbid-Schneidteil (20), das in dem radial umfänglichen Teil (18) des ringförmigen Scheibenkörpers (12) und dieses im Wesentlichen umkreisend montiert ist, das davon nach außen ragt, um mit dem Gestein während des Betriebs in Eingriff zu kommen;
wobei das Schneidteil (20) aus einem Material hergestellt ist, das eine höhere Verschleißfestigkeit aufweist als das Material, das für den mindestens einen Scheibenkörper (12) verwendet wird;
wobei sich eine metallische Zwischenschicht (22), die im Wesentlichen Nickel, eine Nickellegierung, Kupfer oder eine Kupferlegierung umfasst, zwischen dem ringförmigen Scheibenkörper (12) und dem Schneidteil (20) befindet;
**dadurch gekennzeichnet, dass** das Schneidteil (20) in der Form eines durchgehenden Rings (60) vorliegt und wobei die Elemente der metallischen Zwischenschicht (22) Diffusionsverbindungen zwischen dem ringförmigen Scheibenkörper (12) und dem Schneidteil (20) bilden

2. Scheibenschneider (10) nach Anspruch 1, wobei die metallische Zwischenschicht (22) eine Legierung umfasst, die im Wesentlichen aus Kupfer und Nickel besteht.

3. Scheibenschneider (10) nach einem der Ansprüche 1-2, wobei die metallische Zwischenschicht (22) eine Dicke von etwa 5 bis etwa 500 µm aufweist.

4. Scheibenschneider (10) nach einem der Ansprüche 1-3, wobei der ringförmige Scheibenkörper (12) mindestens zwei Schichten umfasst.

5. Scheibenschneider (10) nach Anspruch 4, wobei der ringförmige Scheibenkörper (12) eine erste Schicht (34) und eine zweite Schicht (36) umfasst, wobei die erste Schicht (34) ein Metall- oder Metallmatrix-Verbundmaterial mit einer höheren Verschleißfestigkeit als die zweite Schicht (36) umfasst.

6. Verfahren zum Herstellen eines Scheibenschneiders (10) für eine Schneideinheit, die in Tunnelbohrmaschinen verwendet wird, der einen ringförmigen Scheibenkörper (12), der aus einer Metalllegierung oder einem Metallmatrix-Verbundmaterial hergestellt ist, der eine erste Seite (14), eine zweite Seite (16), die im Wesentlichen der ersten Seite (14) entgegengesetzt eingerichtet ist, und ein radial umfängliches Teil (18) umfasst; und ein Sinterkarbid-Schneidteil (20) in der Form eines durchgehenden Rings (60), das in dem radial umfänglichen Teil (18) des ringförmigen Scheibenkörpers (12) und dieses im Wesentlichen umkreisend montiert ist, das davon nach außen ragt, um mit dem Gestein während des Schneidvorgangs in Eingriff zu kommen; umfassend die folgenden Schritte:
a) Bereitstellen eines ringförmigen Scheibenkörpers (12), der aus einer Metalllegierung hergestellt ist, oder eines ringförmigen Scheibenkörpers (12), der aus einem Metallmatrix-Verbundmaterial hergestellt ist, und eines Sinterkarbid-Schneidteils (20) in der Form eines durchgehenden Rings (60);
b) Positionieren einer metallischen Zwischenschicht (22), die im Wesentlichen Nickel, eine Nickellegierung, Kupfer oder eine Kupferlegierung umfasst, zwischen dem ringförmigen Scheibenkörper (12) und dem Sinterkarbid-Schneidteil (20);
c) Zusammenbauen des ringförmigen Scheibenkörpers (12) und des Sinterkarbid-Schneidteils (20);
d) Umschließen des ringförmigen Scheibenkörpers (12) und des Sinterkarbid-Schneidteils (20) in einer Kapsel;
e) wahlweise Ablassen von Luft aus der Kapsel;
f) Abdichten der Kapsel;
g) Unterziehen der Kapsel einer vorbestimmten Temperatur von über etwa 1000 °C und einem vorbestimmten Druck von etwa 300 bar bis etwa 1500 bar während einer vorbestimmten Zeit.

7. Verfahren nach Anspruch 6, wobei die metallische Zwischenschicht (22) aus einer Legierung gebildet ist, die im Wesentlichen aus Kupfer und Nickel besteht.

8. Verfahren nach einem der Ansprüche 6-7, wobei die metallische Zwischenschicht (22) aus einer Folie oder einem Pulver gebildet wird.

9. Verfahren nach einem der Ansprüche 6-7, wobei die metallische Zwischenschicht (22) durch elektrolytische Beschichtung gebildet wird.

10. Verfahren nach einem der Ansprüche 6-9, wobei Rillen (70) zu der/den Oberfläche(n) des Sinterkarbid-Schneidteils (20) oder zu der/den Oberfläche(n) sowohl des mindestens einen Scheibenkörpers (12) als auch zu der/den Oberfläche(n) des Schneidteils (20) hinzugefügt werden.

## Revendications

1. Molette (10) pour une unité de coupe utilisée dans un tunnelier comprenant :
un corps de disque annulaire (12) fait d'un alliage de métal ou d'un composite à matrice métallique présentant un premier côté (14), un second côté (16) agencé sensiblement en regard du premier côté (14) et une partie radialement périphérique (18) ; et
une partie de coupe en carbure cimenté (20) montée dans et entourant sensiblement la partie radialement périphérique (18) du corps de disque annulaire (12) qui fait saillie vers l'extérieur à partir de celle-ci pour venir en prise avec la roche durant une opération ;
dans laquelle la partie de coupe (20) est faite d'un matériau présentant une plus grande résistance à l'usure que le matériau utilisé pour le au moins un corps de disque (12) ;
dans laquelle il y a une couche intermédiaire métallique (22) comprenant essentiellement du nickel, un alliage de nickel, du cuivre ou un alliage de cuivre entre le corps de disque annulaire (12) et la partie de coupe (20) ;
**caractérisée en ce que** la partie de coupe (20) est sous la forme d'un anneau continu (60) et dans laquelle les éléments de la couche intermédiaire métallique (22) forment des liaisons par diffusion entre le corps de disque annulaire (12) et la partie de coupe (20).

2. Molette (10) selon la revendication 1, dans laquelle la couche intermédiaire métallique (22) comprend un alliage consistant essentiellement en cuivre et nickel.

3. Molette (10) selon l'une quelconque des revendications 1-2, dans laquelle la couche intermédiaire métallique (22) présente une épaisseur d'environ 5 à environ 500 µm.

4. Molette (10) selon l'une quelconque des revendications 1-3, dans laquelle le corps de disque annulaire (12) comprend au moins deux couches.

5. Molette (10) selon la revendication 4, dans laquelle le corps de disque annulaire (12) comprend une première couche (34) et une seconde couche (36), dans laquelle la première couche (34) comprend un métal ou un composite à matrice métallique avec une plus grande résistance à l'usure que la seconde couche (36).

6. Procédé de fabrication d'une molette (10) pour une unité de coupe utilisée dans des tunneliers comprenant un corps de disque annulaire (12) fait d'un alliage de métal ou d'un composite à matrice métallique présentant un premier côté (14), un second côté (16) agencé sensiblement en regard du premier côté (14) et une partie radialement périphérique (18) ; et une partie de coupe en carbure cimenté (20) sous la forme d'un anneau continu (60) montée dans et entourant sensiblement la partie radialement périphérique (18) du corps de disque annulaire (12) qui fait saillie vers l'extérieur à partir de celle-ci pour venir en prise avec la roche durant l'opération de coupe ; comprenant les étapes consistant à :
a) fournir un corps de disque annulaire (12) fait d'un alliage de métal ou un corps de disque annulaire (12) fait d'un composite à matrice métallique et une partie de coupe en carbure cimenté (20) sous la forme d'un anneau continu (60) ;
b) positionner une couche intermédiaire métallique (22) comprenant essentiellement du nickel, un alliage de nickel, du cuivre ou un alliage de cuivre entre le corps de disque annulaire (12) et la partie de coupe en carbure cimenté (20) ;
c) assembler le corps de disque annulaire (12) et la partie de coupe en carbure cimenté (20) l'un avec l'autre ;
d) enfermer le corps de disque annulaire (12) et la partie de coupe en carbure cimenté (20) dans une capsule ;
e) évacuer optionnellement de l'air de la capsule ;
f) fermer hermétiquement la capsule ;
g) soumettre la capsule à une température prédéterminée supérieure à environ 1000 °C et une pression prédéterminée d'environ 300 bar à environ 1500 bar durant un temps prédéterminé.

7. Procédé selon la revendication 6, dans lequel la couche intermédiaire métallique (22) est constituée d'un alliage consistant essentiellement en cuivre et nickel.

8. Procédé selon l'une quelconque des revendications 6-7, dans lequel la couche intermédiaire métallique (22) est constituée d'une feuille ou d'une poudre.

9. Procédé selon l'une quelconque des revendications 6-7, dans lequel la couche intermédiaire métallique (22) est formée par électroplacage.

10. Procédé selon l'une quelconque des revendications 6-9, dans lequel des rainures (70) sont ajoutées à la surface ou aux surfaces de la partie de coupe en carbure cimenté (20) ou à la surface ou aux surfaces du au moins un corps de disque (12) et à la surface ou aux surfaces de la partie de coupe (20).
